# EUROPÄISCHE PATENTSCHRIFT

(11) **EP 1 484 577 B1**
(45) Veröffentlichungstag und Bekanntmachung des Hinweises auf die Patenterteilung: **24.01.2007**
(21) Anmeldenummer: 04102525.5
(22) Anmeldetag: 04.06.2004
(51) Int. Cl.: G01C 15/00

(54) **Detektor zur Bestimmung der Position eines Laserstrahls**
Detector for determining the position of a laser beam
Détecteur de position d'un faisceau laser

(30) Priorität: 05.06.2003 DE 10325416
(43) Veröffentlichungstag der Anmeldung: 08.12.2004
(73) Patentinhaber: HILTI Aktiengesellschaft, 9494 Schaan (LI)
(72) Erfinder: Winter, Andreas, 6800, Feldkrich (AT); Ammann, Manfred, 6923, Lauterach (AT); Kaneider, Willi, 6800, Feldkirch (AT)
(74) Vertreter: Wildi, Roland

(56) Entgegenhaltungen:
- EP-A- 0 819 881
- US-A- 3 870 887
- US-A- 3 894 230
- US-A- 4 926 036
- US-A- 5 009 506

## Beschreibung

Die Erfindung bezeichnet einen Strahlfänger, insbesondere für einen Laserstrahl eines Positioniergerätes.

Bei Positionierungstätigkeiten im Baugewerbe werden Positioniergeräte genutzt, die Laserstrahlen zur Markierung aussenden. Insbesondere bei grösseren Entfernungen, schwach reflektierenden Untergründen und hohen Anforderungen an die Positioniergenauigkeit dienen den Positioniergeräten zugeordnete Strahlfänger zum sicheren Finden des Strahls, zur exakten Markierung bzw. definierten Bestimmung einer Positionsabweichung.

Bei üblichen passiven Strahlfängern dienen optische Hilfsmittel wie Keile, oder Fresnellinsen zur Umsetzung minimaler Lageunterschiede des auftreffenden Laserlichtstrahls in qualitativ unterschiedliche Anzeigen. Bei üblichen aktiven Strahlfängern dient ein, von einer Stromquelle gespeisster, Photodetektor zum Empfang des Laserlichtstrahls und eine, mit einer Auswerteschaltung verbundene, Anzeige zur Bestimmung der Versetzung des Lichtstrahls zum Referenzpunkt.

Nach der US3894230 weist ein aktiver Strahlfänger für einen pulsierenden Lichtstrahl einen Photodetektor mit mehreren, längs einer Linie zu einem Referenzpunkt definiert versetzten Photodioden in Form eines impulsgesteuerten Photodiodenarrays, eine Auswerteschaltung und eine numerische Ausgabe der Versetzung des Lichtstrahls zum Referenzpunkt auf. Die an jeder einzelnen Photodiode kapazitiv angekoppelte, zugeordnete Halteschaltung reagiert auf Lichtimpulse beliebiger Art, wodurch Fremd- und Streulichter vielfältige Störungen hervorrufen können.

Nach der EP0819881 ist die Anwendung phasen- und frequenzselektiver Strahlfänger zur Vermeidung des Hintergrund-Einflusses bekannt.

Nach den US4987461, US4926036 sowie US5009506 wird die Auswertung der Phase zur Bestimmung der Position einen Lichtstrahls verwendet.

Die Aufgabe der Erfindung besteht in der Realisierung eines störungsunempfindlichen Strahlfängers für einen pulsierenden Lichtstrahl.

Die Aufgabe wird im Wesentlichen durch die Merkmale der unabhängigen Ansprüche gelöst. Vorteilhafte Weiterbildüngen ergeben sich aus den abhängigen Ansprüchen.

Im Wesentlichen weist ein Strahlfänger für einen, mit einer Modulationsfrequenz in der Amplitude pulsierenden, Lichtstrahl einen Photodetektor mit mehreren Photosensoren, die zu einem Referenzpunkt örtlich definiert versetzt sind, eine Auswerteschaltung und ein Ausgabemittel auf, wobei zwischen zumindest zwei Photosensoren ein bezüglich der Modulationsfrequenz sensibler Phasenschieber angeordnet ist.

Indem der an zumindest einem Photosensor auftreffende Lichtstrahl durch den zwischen beiden Photosensoren angeordneten frequenzselektiven Phasenschieber einen Maschenstrom bewirkt, verursacht dieser über den Photosensoren anstehende, zueinander phasenverschobene Knotenspannungen mit der Modulationsfrequenz des Lichtstrahls. Diese Knotenspannungen sind phasenselektiv von der Auswerteschaltung auswertbar. Dadurch bilden die örtlich versetzten Photosensoren zusammen mit dem Phasenschieber einen Versetzungsamplituden-Phasen-Konverter aus, welcher vor der Auswerteschaltung angeordnet ist.

Vorteilhaft sind die beiden Endpunkte des Phasenschiebers signalübertragend mit je einem Signaleingang der Auswerteschaltung verbunden, die bezüglich der an beiden Eingängen anliegenden, mit der Modulationsfrequenz des Lichtstrahls amplitudenmodulierten, Signale eine Auswertung in Abhängigkeit von der Phasendifferenz vornimmt, wodurch diese sehr störungsunempfindlich ist. Im Ergebnis einer störungssicheren, phasensensiblen Auswertung in der Auswerteschaltung werden nur pulsierende Lichtstrahlen mit der zugeordneten Modulationsfrequenz detektiert und insbesondere störendes Restlicht unterdrückt.

Vorteilhaft ist zwischen einem Endpunkt, weiter vorteilhaft zwischen beiden Endpunkten, des Phasenschiebers und dem zugeordneten Signaleingang der Auswerteschaltung ein Signalamplitudenverstärker angeordnet, wodurch die Empfindlichkeit des Photodetektors erhöhbar ist.

Vorteilhaft ist der Signalamplitudenverstärker frequenzselektiv für die Modulationsfrequenz des Lichtstrahls, wodurch der Störabstand des Photodetektors erhöht sowie dieser nur für eine spezielle, vorgegebene Modulationsfrequenz des Lichtstrahls sensibel ist. Somit ist der Photodetektor störungssicher bezüglich Lichtstrahlen abweichender Modulationsfrequenz.

Vorteilhaft besteht der Phasenschieber aus einem Netzwerk mit Kapazitäten und weiter vorteilhaft mit Induktivitäten, wodurch eine hohe Frequenzselektivität des Phasenschiebers mit wenigen passiven Komponenten erzielbar ist.

Vorteilhaft sind für eine gegebene Modulationsfrequenz f, weiter vorteilhaft zwischen 100 kHz und 10 MHz, die Kapazitäten C und die Induktivitäten L entsprechend LC = (2 π f) ² dimensioniert, wodurch eine maximale Phasenverschiebung erfolgt, wenn die Modulationsfrequenz der Resonanzfrequenz des Phasenschiebers entspricht.

Vorteilhaft sind die Kapazitäten des Phasenschiebers mit einem Bezugspotential verbunden, mit dem die Photosensoren verbunden sind, wodurch zwischen den einzelnen Photosensoren und dem Phasenschieber bezüglich des Bezugspotentials eine einfache unsymmetrische Signalübertragung erfolgt.

Vorteilhaft sind die beiden Endpunkte des Phasenschiebers mit einer Stromquelle verbunden, weiter vorteilhaft über je einen Widerstand, wodurch die Photosensoren von einem nahezu konstanten Strom durchflossen werden und somit an diesen eine von der Amplitude des auftreffenden Lichtstrahls abhängige Knotenspannung ansteht, die mit der Modulationsfrequenz des Lichtstrahls amplitudenmoduliert ist. Die Phasendifferenz zweier Knotenspannungen ist ein Mass für das Intensitätsverhältnis der an versetzten Orten des aktiven Photodetektors auftreffenden Lichtstrahlen.

Vorteilhaft ist zwischen zwei Endpunkten des Phasenschiebers eine Phasenschieberkette ausgebildet, deren zumindest zwei frequenzselektive Teilphasenschieber jeweils zwischen zwei Photosensoren angeordnet sind, wodurch an diesen Teilphasenschiebern jeweils phasenverschobene Knotenspannungen anstehen, die sich bezüglich der Endpunkte der Phasenschieberkette komplex überlagern.

Vorteilhaft sind zumindest drei, weiter vorteilhaft fünf, Photosensoren als Photosensorzeile zueinander örtlich äquidistant längs einer Linie versetzt, wodurch bezüglich deren Position in der Versetzung/Phasen-Kennlinie eine einfache Funktionalität vorliegt, näherungsweise eine weitgehend linearisierte Funktionalität.

Vorteilhaft ist zwischen je zwei Photosensoren der Photosensorzeile jeweils ein Phasenschieber der Phasenschieberkette angeordnet, wodurch bezüglich deren Positionen in der Photosensorzeile in der Versetzung/Phasen-Kennlinie eine weitgehend linearisierte Funktionalität vorliegt, welche weiter vorteilhaft zur Ablagemessung verwendet wird.

Alternativ vorteilhaft sind zumindest zwei, äquidistant längs einer Linie versetzte, Photosensoren zueinander parallel als Photosensorgruppe verschaltet, wodurch sich deren Zweigströme gleichphasig addieren, wodurch bezüglich deren Position in der Versetzung/Phasen-Kennlinie eine lokal verringerte Abhängigkeit vorliegt.

Vorteilhaft sind genau zwei, um den Referenzpunkt benachbart versetzte, Photosensorgruppen mit je einem Endpunkt des Phasenschiebers verbunden, wodurch bezüglich des Referenzpunktes in der Versetzung/Phasen-Kennlinie eine lokal erhöhte Abhängigkeit vorliegt, welche weiter vorteilhaft zur Nullpunktdetektion verwendet wird.

Vorteilhaft sind die mehreren Photosensoren über einen Mehrpolschalter bezüglich des Phasenschiebers sowohl als Photosensorzeile als auch als Photosensorgruppe schaltbar, wodurch die Versetzung/Phasen-Kennlinie entsprechend des Verwendungszwecks auswählbar ist.

Vorteilhaft ist den Photosensoren lichteingangsseitig ein längs der Linie wirksamer Lichtdiffusor zugeordnet, der weiter vorteilhaft eine sich längs der Linie ersteckende Halbwertsbreite aufweist, innerhalb dessen die längs der Linie integrierte, diffus gestreute Intensität gerade die Hälfte der Intensität eines senkrecht auf den Lichtdiffusor auftreffenden, gebündelten Lichtstrahls beträgt, die zwischen der Hälfte und dem Doppelten des Abstands der diskret beabstandeten Photosensoren liegt, wodurch eine von diskret beabstandeten Photosensoren resultierende Restwelligkeit der Versetzung/Phasen-Kennlinie vermindert wird. Somit ist mit wenigen, diskreten Photosensoren ein grosser, längs der Linie wirksamer, Detektionsbereich im Wesentlichen linear detektierbar.

Die Erfindung wird bezüglich zweier vorteilhafter Ausführungsbeispiele näher erläutert mit:
Fig. 1 als Strahlfänger
Fig. 2 als Prinzipschaltbild
Fig. 3 als Einzelheit
Fig. 4 als Variante der Einzelheit
Fig. 5 als Versetzung/Phasen-Kennlinie

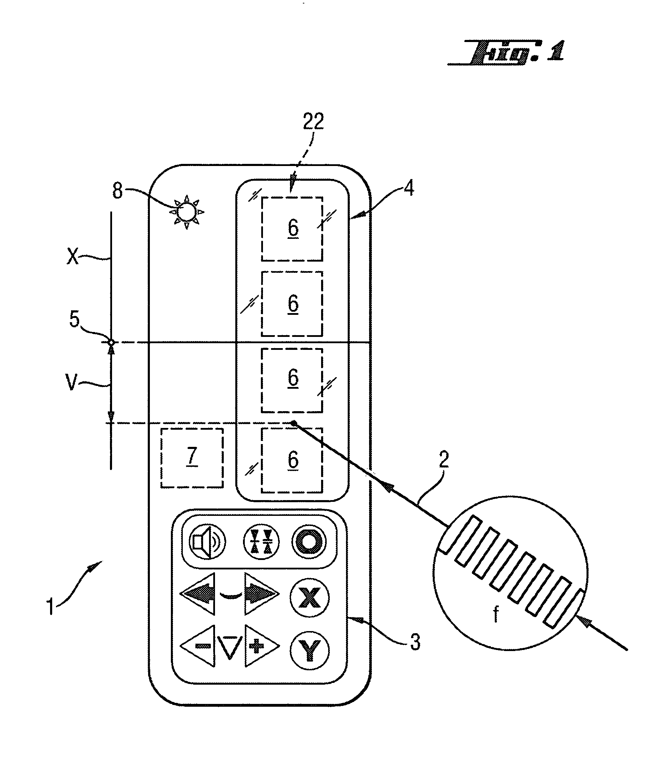

Nach Fig. 1 weist ein handhabbarer Strahlfänger 1 für einen, mit einer Modulationsfrequenz f in der Amplitude pulsierenden, punktuell auftreffenden Lichtstrahl 2 ein Eingabemittel 3 in Form einer Tastatur, einen Photodetektor 4 mit vier, zu einem Referenzpunkt 5 längs einer Linie X örtlich versetzten, Photosensoren 6 in Form einer Photosensorzeile 22, eine Auswerteschaltung 7 und ein Ausgabemittel 8 in Form einer abhängig von einer Versetzung V des auftreffenden Lichtstrahls 2 zum Referenzpunkt 5 gesteuert blinkenden Leuchtdiode auf.

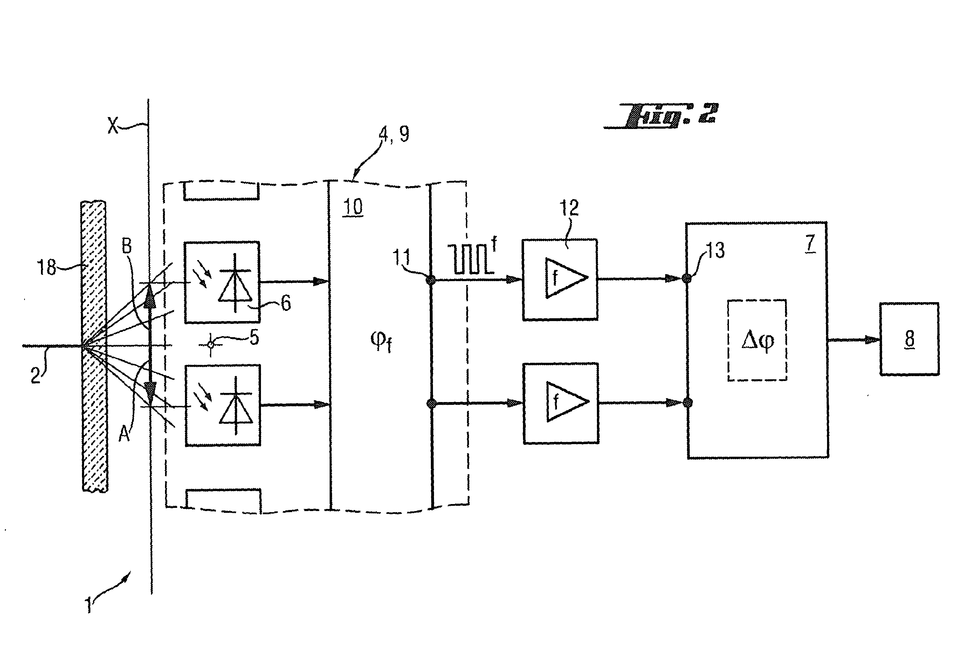

Bei dem Prinzipschaltbild des Strahlfänger 1 ist nach Fig. 2 den längs der Linie X äquidistant im Abstand A örtlich definiert versetzten Photosensoren 6 lichteingangsseitig ein Lichtdiffusor 18 zugeordnet, der eine sich längs der Linie X ersteckende Halbwertsbreite B aufweist, die dem Abstand A der diskret beabstandeten Photosensoren 6 entspricht. Der Photodetektor 4 mit vier Photosensoren 6 ist speziell als Versetzungsamplituden-Phasen-Konverter 9 ausgebildet, indem zwischen zwei Photosensoren 6 ein bezüglich der Modulationsfrequenz f sensibler Phasenschieber 10 angeordnet ist. Die an den beiden Endpunkten 11 anstehenden Signale gleicher Modulationsfrequenz f sind komplex überlagerbar. Die dabei entstehende Phasendifferenz Δϕ ist ein Mass für das Intensitätsverhältnis der an versetzten Orten längs der Linie X des Photodetektors 4 auftreffenden Lichtstrahlen 2. Die beiden Endpunkte 11 des Phasenschiebers 10 sind jeweils über einen, für die Modulationsfrequenz f frequenzselektiven, amplitudenbegrenzenden Signalamplitudenverstärker 12 mit je einem Signaleingang 13 der Auswerteschaltung 7 verbunden. Diese nimmt bezüglich der an beiden Signaleingängen 13 anliegenden, mit der Modulationsfrequenz f des Lichtstrahls 2 amplitudenmodulierten, Signale mit einem integrierten Phasendiskriminator eine Auswertung in Abhängigkeit von der Phasendifferenz Δϕ vor und steuert das Ausgabemittel 8 mit einer Schwebung an, deren Schwebungsnull dem Auftreffen des Lichtstrahls 2 auf dem Referenzpunkt 5 entspricht.

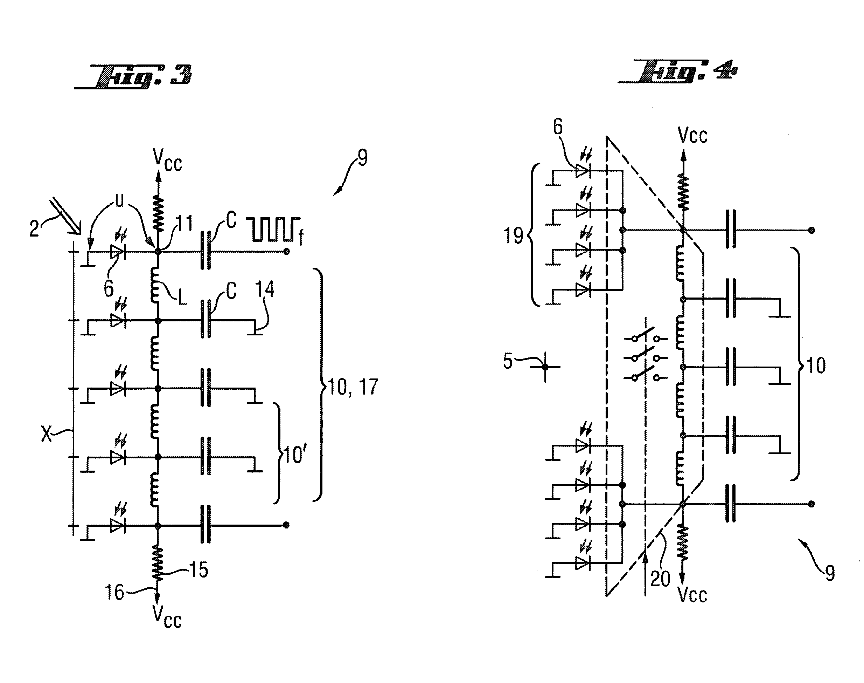

Bei dem Versetzungsamplituden-Phasen-Konverter 9 nach Fig. 3 besteht der Phasenschieber 10 aus einem Netzwerk mit Kapazitäten C und mit Induktivitäten L, die entsprechend der Resonanzbedingung LC = (2 π f ) ² für eine gegebene Modulationsfrequenz f von 1 MHz mit C = 4,7 pF und L = 10 µH dimensioniert sind, wodurch für die Phasenlaufzeit etwa gilt: T ²= LC. In dem topologisch kammförmigen Netzwerk sind die Kapazitäten C des Phasenschiebers 10 mit einem Bezugspotential 14 verbunden, mit dem auch die Photosensoren 6 in Form von in Sperrrichtung orientierten Photodioden verbunden sind. D ie beiden Endpunkte 11 des Phasenschiebers 10 sind über je einen Widerstand 15 mit einer Stromquelle 16 in Form einer nicht dargestellten Batterie mit dem Potential V_{CC} verbunden, wobei der Widerstandswert dem Wellenwiderstand des Phasenschiebers nach Z ² = L/C entspricht. Über den Photosensoren 6 steht eine von der Intensität des auftreffenden Lichtstrahls 2 abhängige Knotenspannung u an, die mit der Modulationsfrequenz f des Lichtstrahls 2 amplitudenmoduliert ist. Zwischen den beiden Endpunkten 11 des Phasenschiebers 10 ist eine Phasenschieberkette 17 ausbildet, deren drei frequenzselektive Teilphasenschieber 10' jeweils zwischen zwei Photosensoren 6 angeordnet sind, die längs der Linie X als Photosensorzeile 22 äquidistant beabstandet angeordnet sind.

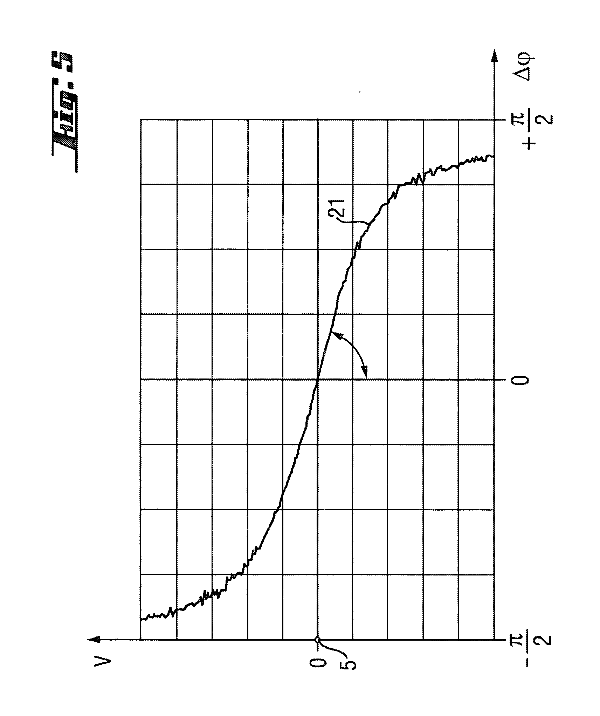

Nach dem alternativen Versetzungsamplituden-Phasen-Konverter 9 nach Fig. 4 bilden mehrere parallel verschaltene Photosensoren 6 eine Photosensorgruppe 19 aus. Über einen nur angedeuteten Mehrpolschalter 20 in Form eines elektronisch steuerbaren Analogschalters sind bezüglich des Phasenschiebers 10 die einzelnen Photosensoren 6 wie dargestellt sowohl mit je vier Photodioden 6 als genau zwei Photosensorgruppen 19, die um den Referenzpunkt 5 benachbart versetzt sind, als auch entsprechend der Topologie nach Fig. 3 als Photosensorzeile 22 schaltbar.

Bei einem derartigen Versetzungsamplituden-Phasen-Konverter ist nach Fig. 5 die Versetzung/Phasen-Kennlinie 21 am Referenzpunkt 5 lokal am steilsten ausgebildet. Somit bewirkt eine kleine Versetzung V vom Referenzpunkt 5 eine grosse Änderung der Phasendifferenz Δϕ.

## Patentansprüche

1. Strahlfänger zur Bestimmung der Position eines, mit einer Modulationsfrequenz (f) in der Amplitude pulsierenden, Lichtstrahls (2) mit einem Photodetektor (4) mit mehreren Photosensoren (6), die zu einem Referenzpunkt (5) örtlich definiert versetzt sind, einer Auswerteschaltung (7) und einem Ausgabemittel (8), **dadurch gekennzeichnet, dass** zwischen zumindest zwei Photosensoren (6) ein bezüglich der Modulationsfrequenz (f) sensibler Phasenschieber (10) angeordnet ist, welcher die Amplituden der Signale der Photosensoren (6) zu einer Phasendifferenz (Δϕ) überlagert, die von der Auswerteschaltung (7) zur Bestimmung der Position verwendet wird.

2. Strahlfänger nach Anspruch 1, **dadurch gekennzeichnet, dass** die beiden Endpunkte (11) des Phasenschiebers (10) signalübertragend mit je einem Signaleingang (13) der Auswerteschaltung (7) verbunden sind, welche zu einer Auswertung in Abhängigkeit von der Phasendifferenz (Δϕ) der an beiden Signaleingängen (13) anliegenden, mit der Modulationsfrequenz (f) des Lichtstrahls (2) amplitudenmodulierten, Signale geeignet ausgeführt ist.

3. Strahlfänger nach Anspruch 1 oder 2, **dadurch gekennzeichnet, dass** zwischen einem Endpunkt (11), optional zwischen beiden Endpunkten (11), des Phasenschiebers (10) und dem zugeordneten Signaleingang (13) der Auswerteschaltung (7) ein Signalamplitudenverstärker (12) angeordnet ist.

4. Strahlfänger nach Anspruch 3, **dadurch gekennzeichnet, dass** der Signalamplitudenverstärker (12) frequenzselektiv für die Modulationsfrequenz (f) des Lichtstrahls (2) ausgebildet ist.

5. Strahlfänger nach einem der vorherigen Ansprüche, **dadurch gekennzeichnet, dass** der Phasenschieber (10) aus einem Netzwerk mit Kapazitäten (C), und optional mit Induktivitäten (L) besteht.

6. Strahlfänger nach Anspruch 5, **dadurch gekennzeichnet, dass** für eine gegebene Modulationsfrequenz f die Kapazitäten C und die Induktivitäten L entsprechend der Formel L C = (2 π f)² dimensioniert sind.

7. Strahlfänger nach Anspruch 5 oder 6, **dadurch gekennzeichnet, dass** die Kapazitäten (C) des Phasenschiebers (10) mit einem Bezugspotential (14) verbunden sind, mit dem die Photosensoren (6) verbunden sind.

8. Strahlfänger nach einem der vorherigen Ansprüche, **dadurch gekennzeichnet, dass** die beiden Endpunkte (11) des Phasenschiebers (10), optional über je einen Widerstand (15), mit einer Stromquelle (16) verbunden sind.

9. Strahlfänger nach einem der vorherigen Ansprüche, **dadurch gekennzeichnet, dass** zwischen zwei Endpunkten (11) des Phasenschiebers (10) eine Phasenschieberkette (17) ausgebildet ist, deren zumindest zwei frequenzselektive Teilphasenschieber (10') jeweils zwischen zwei Photosensoren (6) angeordnet sind.

10. Strahlfänger nach einem der vorherigen Ansprüche, **dadurch gekennzeichnet, dass** zumindest drei Photosensoren (6) als Photosensorzeile (22) zueinander örtlich äquidistant längs einer Linie (X) versetzt sind.

11. Strahlfänger nach Anspruch 10, **dadurch gekennzeichnet, dass** zwischen je zwei Photosensoren (6) der Photosensorzeile (22) jeweils ein Teilphasenschieber (10') der Phasenschieberkette (17) angeordnet ist.

12. Strahlfänger nach einem der Ansprüche 1 bis 10, **dadurch gekennzeichnet, dass** zumindest zwei, äquidistant längs einer Linie (X) versetzte, Photosensoren (6) zueinander parallel als Photosensorgruppe (19) verschalten sind.

13. Strahlfänger nach Anspruch 12, **dadurch gekennzeichnet, dass** genau zwei, um den Referenzpunkt (5) benachbart versetzte, Photosensorgruppen (19) mit je einem Endpunkt (11) des Phasenschiebers (10) verbunden sind.

14. Strahlfänger nach Anspruch 12 oder 13, **dadurch gekennzeichnet, dass** zwischen mehreren Photosensoren (6) und dem Phasenschieber (10) ein Mehrpolschalter (20) angeordnet ist, über den bezüglich des Phasenschiebers (10) die mehreren Photosensoren (6) sowohl als Photosensorzeile (22) als auch als Photosensorgruppe (19) schaltbar sind.

15. Strahlfänger nach einem der Ansprüche 10 bis 14, **dadurch gekennzeichnet, dass** den Photosensoren (6) lichteingangsseitig ein längs der Linie (X) wirksamer Lichtdiffusor (18) zugeordnet ist, der optional eine sich längs der Linie (X) ersteckende Halbwertsbreite (B) aufweist, die zwischen der Hälfte und dem Doppelten des Abstands (A) der diskret beabstandeten Photosensoren (6) liegt.

## Claims

1. Beam catcher for determining the position of a light beam (2) pulsating in amplitude with a modulation frequency (f), comprising a photodetector (4) having a plurality of photosensors (6) which are offset spatially in a defined manner with respect to a reference point (5), an evaluation circuit (7) and an output means (8), **characterised in that** a phase shifter (10) sensitive to the modulation frequency (f) is arranged between at least two photosensors (6), which phase shifter (10) superposes the amplitudes of the signals of the photosensors (6) to form a phase difference (Δϕ) which is used by the evaluation circuit (7) to determine the position.

2. Beam catcher according to claim 1, **characterised in that** both end points (11) of the phase shifter (10) are connected signal-transmittingly to respective signal inputs (13) of the evaluation circuit (7), which is capable of evaluating in dependence on the phase difference (Δϕ) signals amplitude-modulated with the modulation frequency (f) of the light beam (2) which are supplied to the two signal inputs (13).

3. Beam catcher according to claim 1 or 2, **characterised in that** a signal amplitude amplifier (12) is arranged between one end point (11), optionally between both end points (11), of the phase shifter (10) and the associated signal input (13) of the evaluation circuit (7).

4. Beam catcher according to claim 3, **characterised in that** the signal amplitude amplifier (12) is configured to be frequency-selective for the modulation frequency (f) of the light beam (2).

5. Beam catcher according to any one of the preceding claims, **characterised in that** the phase shifter (10) consists of a network comprising capacitors (C) and optionally inductors (L).

6. Beam catcher according to claim 5, **characterised in that** for a given modulation frequency f the capacitors C and the inductors L are dimensioned according to the formula LC = (2πF)².

7. Beam catcher according to claim 5 or 6, **characterised in that** the capacitors (C) of the phase shifter (10) are connected to a reference potential (14) to which the photosensors (6) are connected.

8. Beam catcher according to any one of the preceding claims, **characterised in that** the two end points (11) of the phase shifter (10) are connected to a current source (16), optionally via a respective resistor (15).

9. Beam catcher according to any one of the preceding claims, **characterised in that** a phase shifter chain (17) is formed between two end points (11) of the phase shifter (10), at least two frequency-selective sub-phase shifters (10') of which phase shifter chain (17) are arranged between two photosensors (6) in each case.

10. Beam catcher according to any one of the preceding claims, **characterised in that** at least three photosensors (6) are offset spatially equidistantly from one another along a line (X) as a photosensor row (22).

11. Beam catcher according to claim 10, **characterised in that** a sub-phase shifter (10') of the phase shifter chain (17) is arranged between each two photosensors (6) of the photosensor row (22).

12. Beam catcher according to any one of claims 1 to 10, **characterised in that** at least two photosensors (6) are connected in parallel to one another equidistantly along a line (X) as a photosensor group (19).

13. Beam catcher according to claim 12, **characterised in that** exactly two photosensor groups (19) offset adjacently around the reference point (5) are each connected to respective end points (11) of the phase shifter (10).

14. Beam catcher according to claim 12 or 13, **characterised in that** a multi-pole switch (20) is arranged between a plurality of photosensors (6) and the phase shifter (10), by means of which multi-pole switch (20) the plurality of photosensors (6) are switchable to form both a photosensor row (22) and a photosensor group (19) with respect to the phase shifter (10).

15. Beam catcher according to any one of claims 10 to 14, **characterised in that** a light diffuser (18) effective along the line (X) is associated with the photosensors (6) on the light entry side, which light diffuser (18) optionally has a half-value width (B) extending along the line (X) which is between half and twice the distance (A) between the discretely spaced photosensors (6).

## Revendications

1. Cible pour déterminer la position d'un rayon lumineux (2) modulé en amplitude à une fréquence de modulation (f), comprenant un photodétecteur (4) avec plusieurs photocapteurs (6) dont l'emplacement est décalé de manière définie par rapport à un point de référence (5), un circuit d'analyse (7) et un moyen d'édition (8), **caractérisée en ce qu'**entre au moins deux photocapteurs (6) est disposé un déphaseur (10) qui est sensible à la fréquence de modulation (f) et qui superpose les amplitudes des signaux des photocapteurs (6) pour former une différence de phase (Δϕ) utilisée par le circuit d'analyse (7) pour déterminer la position.

2. Cible selon la revendication 1, **caractérisée en ce que** les deux extrémités (11) du déphaseur (10) sont chacune connectées avec transmission de signaux à une entrée de signal (13) du circuit d'analyse (7), lequel est conçu pour réaliser une analyse en fonction de la différence de phase (Δϕ) des signaux appliqués aux deux entrées de signal (13) et modulés en amplitude à la fréquence de modulation (f) du rayon lumineux (2).

3. Cible selon la revendication 1 ou 2, **caractérisée en ce qu'**entre une extrémité (11), optionnellement entre les deux extrémités (11), du déphaseur (10) et l'entrée de signal associée (13) du circuit d'analyse (7) est disposé un amplificateur d'amplitude de signal (12).

4. Cible selon la revendication 3, **caractérisée en ce que** l'amplificateur d'amplitude de signal (12) est conçu de manière sélective pour la fréquence de modulation (f) du rayon lumineux (2).

5. Cible selon une des revendications précédentes, **caractérisée en ce que** le déphaseur (10) est constitué d'un réseau de condensateurs (C) et, optionnellement, de bobines d'inductance (L).

6. Cible selon la revendication 5, **caractérisée en ce que**, pour une fréquence de modulation f donnée, les condensateurs C et les bobines d'inductance L sont dimensionnés selon la formule L C = (2 π f)².

7. Cible selon la revendication 5 ou 6, **caractérisée en ce que** les condensateurs (C) du déphaseur (10) sont connectés à un potentiel de référence (14) auquel les photocapteurs (6) sont connectés.

8. Cible selon une des revendications précédentes, **caractérisée en ce que** les deux extrémités (11) du déphaseur (10) sont connectées, optionnellement chacune à travers une résistance (15), à une source de courant (16).

9. Cible selon une des revendications précédentes, **caractérisée en ce qu'**entre deux extrémités (11) du déphaseur (10) est disposée une chaîne de déphasage (17) dont au moins deux déphaseurs partiels à sélection de fréquences (10') sont disposés chacun entre deux photocapteurs (6).

10. Cible selon une des revendications précédentes, **caractérisée en ce qu'**au moins trois photocapteurs (6) sont décalés l'un par rapport aux autres à équidistance spatiale le long d'une ligne (X) pour former une ligne de photocapteurs (22).

11. Cible selon la revendication 10, **caractérisée en ce qu'**entre deux photocapteurs (6) de la ligne de photocapteurs (22) est disposé à chaque fois un déphaseur partiel (10') de la chaîne de déphasage (17).

12. Cible selon une des revendications 1 à 10, **caractérisée en ce qu'**au moins deux photocapteurs (6) décalés à équidistance le long d'une ligne (X) sont montés en parallèle les uns avec les autres pour former un groupe de photocapteurs (19).

13. Cible selon la revendication 12, **caractérisée en ce qu'**exactement deux groupes de photocapteurs (19) décalés au voisinage du point de référence (5) sont connectés chacun à une extrémité (11) du déphaseur (10).

14. Cible selon la revendication 12 ou 13, **caractérisée en ce qu'**entre plusieurs photocapteurs (6) et le déphaseur (10) est disposé un commutateur multipolaire (20) permettant de commuter au déphaseur (10) la pluralité de photocapteurs (6) aussi bien en tant que ligne de photocapteurs (22) qu'en tant que groupe de photocapteurs (19).

15. Cible selon une des revendications 10 à 14, **caractérisée en ce qu'**aux photocapteurs (6) est associé, côté entrée de lumière, un diffuseur de lumière (18) qui agit le long de la ligne (X) et qui présente optionnellement une largeur de valeur moyenne (B) qui s'étend le long de la ligne (X) et qui se situe entre la moitié et le double de l'écartement (A) des photocapteurs à écartement discret (6).
